# EUROPEAN PATENT APPLICATION

(11) **EP 4 415 230 A1**
(43) Date of publication of application: **14.08.2024**
(21) Application number: 23155890.9
(22) Date of filing: 09.02.2023
(51) Int. Cl.: H02K 1/30, H02K 1/2796, H02K 1/2798, H02K 7/00, H02K 21/24

(54) **WIDE-FOOTED ROTOR**

(71) Applicant: Koenigsegg Automotive AB, 262 74 Ängelholm (SE)
(72) Inventor: SZEKELY, András Péter, 262 63 ÄNGELHOLM (SE); KRÜGER BECK, Martin, 262 33 ÄNGELHOLM (SE); von KOENIGSEGG, Christian, 266 54 VEJBYSTRAND (SE)
(74) Representative: Brann AB

(57) **Abstract**

An electric motor (10) is proposed comprising a stator (12) and a rotor (14), wherein the electric motor (10) is an axial-flux motor, the rotor (14) has a rotational axis (24) and is rotationally arranged relative to the stator (12). The rotor (14) comprises: a plurality of permanent magnets (22), a magnet holder (20), and a motor shaft (18). The magnet holder (20) supports the magnets (22) and is fixed to the motor shaft (18). The magnet holder (20) has an varying axial width, and the axial width of the magnet holder (20) is greater at the motor shaft (18) than at the magnets (22).

## Description

### TECHNICAL FIELD

The proposed technology generally relates to the field electric motors, and in particular to axial-flux permanent-magnet motors.

### BACKGROUND

An electric motor is an electrical machine converting electrical energy into mechanical energy. An electric motor has a stator and a rotor that rotates relative to the stator. The components are typically positioned in a housing that supports the stator and the rotor is supported by bearings allowing it to rotate relative to the stator. Permanent magnet motors operate through the interaction between dynamically generated magnetic fields and permanent magnets. In a subgroup of such motors the permanent magnets are fixed to the rotor and the stator has inductor elements that cooperate with the magnets to rotate the rotor. An inductor element encompasses an inductor core and a coil wound around the inductor core. The magnets and the inductor cores are spaced apart with airgaps between them. In axial-flux motors the magnetic flux between the inductor cores and the magnets in the airgaps is parallel to the rotational axis of the rotor.

### SUMMARY

An object of the proposed technology is to improve the performance of axial-flux motors, such as the power density and torque density, for example by allowing for stronger permanent magnets and stronger dynamically generated magnetic fields. It is also an object to improve axial-flux motors with respect to vibrations of the rotor, for example oscillations caused by the interaction between magnets and the inductor elements as the rotor rotates relative to the stator.

In a first aspect of the proposed technology, an electric motor is proposed comprising a stator and a rotor, wherein the electric motor is an axial-flux motor. The rotor has a rotational axis and is rotationally arranged, or rotationally supported, relative to the stator, and the rotor comprises: a plurality of permanent magnets, a magnet holder, or carrier, and a motor shaft. The magnet holder supports the magnets and is fixed, or attached, to the motor shaft. The magnet holder has a varying axial width, and the axial width of the magnet holder is greater at the motor shaft than at the magnets. Worded differently, the axial width of the magnet holder is narrowing between the motor shaft and the magnets at an increased radius relative to the motor shaft, or to the rotational axis.

It is understood that the stator may comprise a plurality of inductor elements, and that inductor elements and the permanent magnets are arranged to cooperate for rotating the rotor relative to the stator. It is further understood that the magnet holder may be disc-like and that the magnets may be fixed to the magnet holder. The magnet holder may form a frame around each magnet.

An axial-flux motor is understood to have the stator and the rotor arranged such that the airgap between the inductor cores and the magnets is aligned, or parallel, with the axis of rotation of the rotor. It is further understood that the poles of each magnet are aligned, or arranged parallel, with the axis of rotation of the rotor. This means that the magnetic flux in the airgap is predominantly aligned, or parallel, with the axis of rotation. In this configuration, the inductor cores may be arranged in series in a circular pattern and the magnets may be arranged in a series in a corresponding circular pattern that is concentric with the circular pattern of the inductor cores and axially displaced relative to the inductor cores. The number of inductor elements and the number of magnets may be the same.

It is understood that the motor shaft is centered on the rotational axis. An axial width is understood as aligned with, or parallel with, the motor shaft, or with the rotational axis. It is understood that an axial width may be an average width, for example if the magnet holder has an undulating cross section at a set radius relative the rotational axis.

The greater axial width of the magnet holder at the at the motor shaft contributes to a stiffer magnet holder in a direction along the rotational axis. In extension, this contributes reduce vibrations of the rotor and allows for stronger magnetic fields. The stronger magnetic fields in turn contributes to improved power and torque densities.

The magnet holder may form, or define, a first interior space. The first interior space may be located at the motor shaft. It is understood that the abovementioned axial width at the shaft may include the axial width of the first interior space. The first interior space may be annular and centered on the motor shaft, or on the rotational axis. This means that the first interior space encircles the motor shaft. The first interior space may taper, or narrow, at an increased radial distance from the motor shaft, or the rotational axis. Worded differently, the axial width of the first interior space may decrease with the radial distance from the motor shaft, or from the rotational axis, or it may taper from the shaft toward the magnets. The first interior space may be circular symmetric relative to the motor shaft, or to the rotational axis. The first interior space may have an axial cross-section relative to the shaft, or to the rotational axis, that outlines a triangular geometry. For example, it may outline an equilateral triangle having a base facing the shaft. Here, an axial cross section is understood as a cross section in a plane embedding the rotational axis, or in a plane in which the rotational axis lies. The features described here contribute to an improved stiffness of the magnet holder parallel with the rotational axis. It also contributes to a reduced weight of the rotor, which in extension contributes to improved power and torque densities.

The above defined first interior space may be located between the magnets and the motor shaft. The magnet holder may form, or define, a plurality of second interior spaces, wherein a second interior space is located between each pair of neighboring magnets. The number of magnets and the number of second interior spaces may be the same.

At least one of the second interior spaces may be disjoint, or separated, from the first interior space, or all second interior spaces may be disjoint, or separated, from the first interior space. The latter means that the magnet holder forms a structure preventing access from the first interior space to any of the second interior spaces.

Alternatively, at least one of the second interior spaces may be joined, or connected, to the first interior space, or all second interior spaces may be joined, or connected, to the first interior space. The latter means that the first interior space and the second interior spaces jointly form a single uninterrupted, or continuous, space. Worded differently, the magnet holder may form a plurality of interior openings, wherein each second interior space is interconnected with the first interior space by an interior opening.

It is understood that each magnet and each second interior space may have a radial length transverse, or perpendicular, to the motor shaft, or to the rotational axis. Each second interior space that is disjoint from the first interior space may have a radial length that is less than the radial length of the neighboring magnets it is located between. The radial extent of each disjoint second interior space may be smaller than 90% of the radial extent of the neighboring magnets. The radial extent of each disjoint second interior space may be greater than 60% of the radial extent of the neighboring magnets. The radial length of each second interior space that is joined to the first interior space may have a radial length that is greater than the radial length of the neighboring magnets it is located between. The radial extent of each disjoint second interior space may be smaller than 120% of the radial extent of the neighboring magnets. This allows for the joined second interior spaces to connect to the first interior space.

Each second interior space may be disjoint from the pair of neighboring magnets it is positioned between. This means that the neighboring magnet are not exposed to the interior space, and that the tangential width of the second interior space is smaller than the tangential width of the separation between the neighboring magnets. Here, a tangential width is understood to be in a plane normal to the rotational axis of the rotor and perpendicular to any line in the plane crossing the rotational axis. The second interior space may have a tangential width that is smaller than 80%, or smaller than 70%, of the of the tangential width of the separation between the neighboring magnets. The second interior space may have a tangential width that is greater than 40%, or greater than 50%, of the of the tangential width of the separation between the neighboring magnets. This contributes to a secure support of the magnets.

The first interior space and the second interior space contribute to a lighter rotor, and in extension to improved power and torque densities. They also contribute to reduce eddy currents at the magnets, for example from axially divergent magnetic fields at the edges of the inductor cores.

The magnet holder may enclose the first interior space. Alternatively, the magnet holder may form, or define, an opening to the first interior space that faces the motor shaft. The opening may be annular, which means that it encircles the motor shaft. Worded differently, the first interior space may be open toward the motor shaft. The motor shaft and the magnet holder may then jointly enclose the first interior space.

The magnet holder may have a first side facing in a first direction and a second side facing in a second direction, wherein the second direction is opposite to the first direction. It is understood that the first direction and the second direction are parallel with the motor shaft, or with the rotational axis. The magnets may be exposed in the first direction. Worded differently, the magnets may be exposed on the side facing the inductor elements. That the magnets are exposed means that they are not covered by the magnet holder. The magnets may also be exposed in the first direction, for example if the electric motor is a dual-stator axial-flux motor.

The magnet holder may be composed of an annular inner portion centered on the motor shaft, or on the rotational axis, and an annular outer portion centered on the motor shaft, or on the rotational axis, wherein the outer portion is joined to, or connected to, the inner portion, the inner portion is fixed to the motor shaft, and the outer portion supports the magnets. It is understood that the magnets are fixed to the outer portion.

The axial width of the inner portion may be greater than the axial width of the outer portion.

The inner portion of the magnet holder may be circular symmetric, or disc like. The inner portion may taper, or narrow, at an increased radial distance from the motor shaft, or from the rotational axis. Worded differently, the axial width of the inner portion may decrease with the radial distance from the motor shaft, or from the rotational axis, or the inner portion may taper from the shaft toward the magnets.

The inner portion may define a convex, or conical, geometry on the first side of the magnet holder. Similarly, the inner portion may define a convex, or conical, geometry on the second side of the magnet holder. These geometries contribute to an improved stiffness of the magnet holder parallel to the rotational axis.

The inner portion may have a first side and a second side corresponding to the first side and the second side of the magnet holder. The first side and the second side of the inner portion may converge toward the outer portion, or at an increased radial distance from the motor shaft, or from the rotational axis.

The inner portion of the magnet holder may form, or define, the abovementioned first interior space. The inner portion may have a first wall at the first side of the magnet holder and a second wall at the second side of the magnet holder. The first wall and the second wall may jointly form, or define, the first interior space. The first wall and the second wall may be annular and centered on the motor shaft, or on the rotational axis. The first interior space may be located between the first wall and the second wall. The first wall and the second wall of the inner portion may converge toward the outer portion, or at an increased radial distance from the motor shaft, or from the rotational axis. It is understood that the first wall and the second wall may be connected to the outer portion of the magnet holder, or that they connect to one another at the outer portion of the magnet holder.

The first wall, the second wall, and the motor shaft may jointly enclose the first interior space. The first wall and the second wall may contact, or be biased against, the motor shaft. The inner portion may then be constituted by the first wall and the second wall. This means that it does not encompass a single solid wall structure.

Alternatively, the inner portion may have a third wall facing the motor shaft, and the first wall, the second wall, and the third wall may jointly form, or define, the first interior space. The first wall, the second wall, and the third wall may jointly enclose the first interior space. The inner portion may then be constituted by the first wall, the second wall, and the third wall. This means that it does not encompass a single solid wall structure. It is understood that the third wall may interconnect the first wall and the second wall. The third wall may contact, or be biased against, the motor shaft.

The outer portion of the magnet holder may have an even, or unchanging, axial width at an increased radial distance from the motor shaft, or from the rotational axis. Worded differently, the axial width of the inner portion may be uniform for different radial distance from the motor shaft, or from the rotational axis.

The outer portion may define a planar, or flat, geometry on the first side of the magnet holder. Similarly, the outer portion may define a planar, or flat, geometry on the second side of the magnet holder. This means that the outer portion has an axial width that is unchanging with the radius to the rotational axis of the rotor. The planar geometry of the outer portion of the magnet holder allows for a narrow airgap. As mentioned above, the improved stiffness as such contributes to reduce vibrations of the magnet holder at the magnets, which also allows for a narrower airgap.

The outer portion may have a first side and a second side corresponding to the first side and the second side of the magnet holder. The first side and the second side of the outer portion may be aligned, or parallel.

The outer portion of the magnet holder may be a single-walled solid structure. It is understood that this is in the axial direction. This means that it does not form, or define, any interior spaces. Alternatively, the magnet holder, or the outer portion of the magnet holder, may form, or define, a plurality of second interior spaces, as specified above.

Each magnet may have four sides facing in different directions that are transverse, or perpendicular, to the rotational axis. The magnet holder may contact the four sides of each magnet. Worded differently, the magnet holder may encircle each of the magnets, or the magnet holder may bridge the first side and the second side at the magnet. The magnet holder, or the outer portion of the magnet holder, may form an annular bridge connecting the first side and the second side of the magnet holder, wherein the annular bridge is centered on the motor shaft, or the rotation axis, and is located at, or contacts, the magnets. The annular bridge may form, or define, an uninterrupted ring structure. This means that it has no of interior openings interconnecting the first interior space and the second interior spaces. Alternatively, the annular bridge may form, or define, the abovementioned interior openings interconnecting the first interior space and the second interior spaces.

The motor shaft may comprise, or form, a radially extending first flange, wherein the abovementioned first wall is attached to the first flange. Similarly, the motor shaft may comprise, or form, a radially extending second flange, wherein the abovementioned second wall is attached to the second flange. It is understood that the first flange and the second flange form part of the motor shaft and that they are fixed relative to the rest of the motor shaft.

The first flange may have a plurality of first bores, and the first wall may be attached to the first flange by plurality of first bolts, or first fasteners, individually cooperating with the first bores. Each first bore and each first bolt may be oriented parallel with the motor shaft, or with the rotational axis. Each first bolt may have a head that engages the first wall and biases the first wall against the first flange. For example, the first wall may form plurality of first through holes through which the first bolts individually extend. Similarly, the second flange may have a plurality of second bores, and the second wall may be attached to the second flange by plurality of second bolts, or second fasteners, individually cooperating with the second bores. Each second bore and each second bolt may be oriented parallel with the motor shaft, or with the rotational axis. Each second bolt may have a head that engages the second wall and biases the second wall against the second flange. For example, the second wall may form plurality of second through holes through which the second bolts individually extend. The heads of the first bolts and the second bolts may face in the same direction. This means that the first bolts and the second bolts are tightened from the first side of the magnet holder and that the first wall and the second wall are positioned on the same side relative to the first flange respective the second flange. The first wall of the inner portion may then form access holes through which the second bolts can be tightened.

The first wall may form a first shaft bore, or first shaft aperture, and the second wall may form a second shaft bore, or second shaft aperture, wherein the motor shaft extends through the first shaft bore and the second shaft bore. It is understood that the first shaft bore and the second shaft bore are throughgoing and centered on the motor shaft, or on the rotational axis. The second shaft bore may be arranged, or formed, to allow passage of the first flange. This allows the magnet holder to be mounted on the motor shaft by pushing the magnet holder in the second direction relative to the motor shaft, or relative to the rotational axis. For example, the second shaft bore and the first flange may define, or have, geometries that allow the first flange to pass through the second shaft bore. This may be achieved by the second shaft bore and the first flange having matching protrusions and depressions that are transverse, or radial, to the motor shaft, or to the rotational axis. Alternatively, it may be achieved by the second shaft bore being circular and the first flange having a circular outer edge that is smaller than the diameter of the second shaft bore. The second flange may then have a circular outer edge with a greater diameter than the circular outer edge of the first flange. The mounting of the magnet holder described here is advantageous in combination with the inner portion having no third wall facing or biasing against the motor shaft. It contributes to a lightweight construction of the electric motor, and in extension to an improved power and torque density.

The motor shaft may have a conical, or tapered, section. It is understood that the conical section extends along the motor shaft, or along the rotational axis, and that it is centered on the rotational axis of the shaft, or on the rotational axis. The motor shaft may have a narrow section. It may further have a wide section, wherein the wide section has a diameter that is greater than the diameter of the narrow section. It is understood that both the narrow section and the wide section may be cylindrical. The conical section may interconnect the narrow section and the wide section. It is understood that the conical section has a narrow end and a wide end. The narrow end may connect to the narrow section and the wide end may connect to the wide section. It is further understood that that conical section may have the same diameter as the narrow section at the narrow section, or at the narrow end, and same diameter as the wide section at the wide section, or at the wide end. The conical fitting of the magnet holder on the motor shaft can be made without any fasteners extending through the magnet holder, which contributes to an easier mounting on the shaft and a reduction of conductive materials in the proximity of the stator. It also contributes to a lighter rotor, which in turn contributes to improved power and torque densities.

The magnet holder, or the inner portion of the magnet holder, may form a conical, or tapered, shaft bore, wherein the motor shaft extends through the conical shaft bore and the conical section of the motor shaft is mated with the magnet holder within the conical shaft bore. This way, the magnet holder may be fixed, or attached, to the motor shaft by an interference fit, or friction fit, between the magnet holder and the conical section. The conical section and the conical shaft bore may have matching geometries, which contributes to improve the friction fit. It is understood that the conical section may form a conical shaft surface and that the conical shaft bore, or the inner part of the magnet holder, may form a conical bore surface that is flush with the conical shaft surface. It is understood that the conical shaft surface and the conical bore surface may be smooth and outline a truncated cone. This means that there are no cooperating splines between the magnet holder and the shaft.

The rotor may further comprise a lock, or fastener, preventing the magnet holder from moving toward the narrow section. Worded differently, the lock may bias the magnet holder toward the conical section, or toward the wide section. The lock may engage the narrow section and the magnet holder, or the inner portion of the magnet holder. The lock may be, or comprise, a lock ring centered on and attached to the narrow section of the motor shaft. It is understood that the lock ring may be positioned at, or contact, the magnet holder. The lock ring may be attached to the motor shaft, or the narrow section of the motor shaft, by an interference fit, or friction fit, between the lock ring and the narrow section of the motor shaft. For example, the lock ring may be shrink fitted or press fitted on the narrow section of the motor shaft. Alternatively, the lock may comprise a threaded ring, or nut, centered on and attached to the narrow section of the motor shaft. It is understood that the threaded ring has female threads, and that the narrow section has cooperating male threads. It is further understood that the threaded ring may be positioned at, or contacts, the magnet holder, or the inner portion of the magnet holder.

It is specified above that the axial width is greater at the motor shaft than at the magnets. This contributes to a greater conical shaft surface, which in turn contributes to improve the interference fit between the magnet holder and the conical section of the motor shaft. The conical section and the conical shaft bore are advantageous in combination with the abovementioned third wall third wall facing the motor shaft. The third wall may form the conical shaft bore or the conical bore surface. The third wall and the conical geometries of the motor shaft and shaft bore contributes to improved friction fit between the magnet holder and the motor shaft.

It is specified above that axial width of the magnet holder is greater at the motor shaft than at the magnets. The axial width at the motor shaft may be greater than 160%, or greater than 180%, of the axial width at the magnets. The axial width at the motor shaft may be smaller than 400%, or smaller than 300%, of the axial width at the magnets.

It is specified above that the inner portion of the magnet holder may have a first wall and a second wall. The combined axial width of the first wall as such and the second wall as such may be in the range 80% to 120% of the axial width of the outer portion, or of the magnets. The axial width of the first wall may be in the range 40% to 60% of the axial width of the outer portion, or of the magnets. The axial width of the second wall may be in the range 40% to 60% of the axial width of the outer portion, or of the magnets. Each of the first wall and the second wall may have a uniform axial width. This means that it does not change with the radius or rotational angle to the rotational axis. The radial thickness of the third wall may be in the range 40% to 60% of the axial width of the outer portion, or of the magnets. Here, a radial thickness is understood as transverse to, or perpendicular to, the motor shaft or the rotational axis. The different axial widths described here may be the average axial width of respective element. Similarly, the radial thickness may be the average radial thickness of the third wall.

The inner portion of the magnet holder may extend to a first radius relative to the rotational axis of the rotor. Similarly, the outer portion of the magnet holder may extend to a second radius relative to the rotational axis of the rotor. The first radius may be greater than 40%, or greater than 50%, of the second radius. The first radius may be smaller than 70%, or smaller than 80%, of the second radius. The center-of gravity of each magnet may be located at a third radius relative to the rotational axis of the rotor. The first radius may be greater than 50%, or greater than 60%, of the third radius. The first radius may be smaller than 80%, or smaller than 90%, of the third radius.

It has been found that the above relative dimensions are favorable with respect to oscillations of the magnet holder.

The magnet holder may be a monolithic structure. This means that it is not assembled from several components but formed from a single piece of material. The magnet holder may be of a composite material composed of a polymer matrix and reinforcing fibers. It is understood that the polymer matrix is fully cured. For example, the polymer matric may be a heat-curing epoxy. The reinforcing fibers may be carbon fibers. Preferably, the reinforcing fibers are woven carbon fibers. Woven carbon fibers are understood to encompass a fabric of woven carbon fibers or carbon fibers strands, or tows.

The composite material and the carbon fibers contributes to a stiffer and lighter structure, which in extension contributes to improved power and torque densities and reduced vibrations of the magnet holder.

The reinforcing fibers may be composed of overlapping sheets of woven carbon fibers, wherein each sheet at the magnets has a maximum extension, or maximum sheet dimension, that is less than the radial extension, or less than 60% of the radial extension, , of the magnets relative to the rotational axis. Here, a radial extension, or radial length, is understood as transverse, or perpendicular, to the motor shaft, or to the rotational axis. Carbon fibers are electrically conductive, and the specified maximum extension of the sheets contributes to reduce eddy current in the magnet holder.

It is specified above that the magnet holder may form a first interior space. The first interior space may be hollow, or empty. Alternatively, the first interior space may be filled by a first core. The first core may be of a first material that is electrically insulating and/or has a lower density than the composite material of the magnet holder, for example a foam-like material, such as microcellular plastics. It is also specified above that the magnet holder may form second interior spaces. The second interior spaces may be hollow, or empty. Alternatively, each second interior space may be filled by a second core. The second cores may be of a second material that is electrically insulating and/or has a lower density than the composite material of the magnet holder, such as a foam-like material.

The first core and the second cores may be disjoint. This means that the latter do not contact the former. The first material and the second material may be the same. The first core and the second cores may be connected to form a monolithic structure, for example molded as a single piece of microcellular plastics. The first core and the second cores may be connected via the abovementioned interior openings.

The stator may comprise a plurality of inductor elements, and the inductor elements and the magnets are arranged to cooperate for rotating the rotor relative to the stator. Each inductor element comprises: an inductor core and a coil. The inductor core forms, or has, an air-gap surface and an annular, or circumferential, surface. The air-gap surface faces the rotor, and the annular surface is transverse, or perpendicular, to the air-gap surface. The coil is wound around the annular surface of the inductor core. The coil may comprise a bundle of electric conductors.

The inductor core may define a cylindrical geometry. The annular surface of the inductor core of each inductor element may be cylindrical. It is understood that the annular surface may envelop, or encircle, the complete inductor core. The coil of the inductor element and the annular surface may be concentric, or coaxial. In other words, the cylindrical annular surface may have a cylinder axis and the coil may have a coil axis that is aligned, or coaxial, with the cylinder axis.

The inductor core of each inductor element may be of a magnetic material. The magnetic material may be ferromagnetic. For example, the magnetic material may be composed of sandwiched sheets of electrical/silicon steel that are coated with an electrically insulating layer.

The stator may comprise a stator yoke interconnecting the inductor cores of the inductor elements. The stator yoke may be of the same material as the inductor cores. The stator yoke may be seamlessly joined to the inductor cores. The air-gap surface of the inductor core of each inductor element may face away from the stator yoke. Worded differently, the inductor core of each inductor element may connect to the stator yoke on the opposite side relative to its air-gap surface. It is understood that the stator yoke may be annular and concentric with, or centered on, the rotational axis.

The electric motor may further comprise a housing enclosing the stator. The housing may support the stator. The electric motor may further comprise a bearing interconnecting the rotor, or the motor shaft, and the housing and rotationally connecting, or rotationally supporting, the rotor relative to the housing, and in extension relative to the stator.

The axial-flux motor may be a single-sided axial-flux motor. This means that it has a single stator and a single rotor. Alternatively, the axial-flux motor is a dual-stator axial-flux motor. The electric motor then has an additional stator sharing the features of the above-described stator but arranged with the air-gap surfaces of the inductor cores facing in the direction the stator. The magnets of the rotor are then arranged between the stator and the additional stator. Alternatively, the axial-flux motor may be a double-sided axial-flux motor. The electric motor then has an additional rotor sharing the features of the above-described rotor. The stator is then positioned between the rotor and the additional rotor. The stator of the double-sided axial-flux motor may have a plurality of additional inductor elements sharing the features of the above-described inductor elements but arranged with the air-gap surfaces facing away from the inductor elements. The motor shaft may have an additional first flange, an additional second flange, or an additional conical section arranged to cooperate with the additional rotor as described above for the shaft and the rotor, but with the first side of the additional rotor facing in the second direction. The stator may comprise a stator yoke positioned between the plurality of inductor elements and the additional inductor elements and interconnecting the inductor cores of the inductor elements and the additional inductor elements. The inductor elements may be arranged to primarily cooperate with the rotor and the additional inductor elements may be arranged to cooperate with the additional rotor.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended schematic drawings, wherein:
Figures 1a and 1b are cross-sectional views of the upper part of an axial-flux motor, with the rotor in Figure 1b rotated 30° relative to the rotor in Figure 1a.
Figure 2 is an axial view the stator of Figures 1a and b.
Figures 3a and 3b are axial views of the motor shaft of the rotor of Figures 1a and 1b viewed from the first respective second direction.
Figures 4a and 4b are axial views of the magnet holder and the magnets of the rotor of

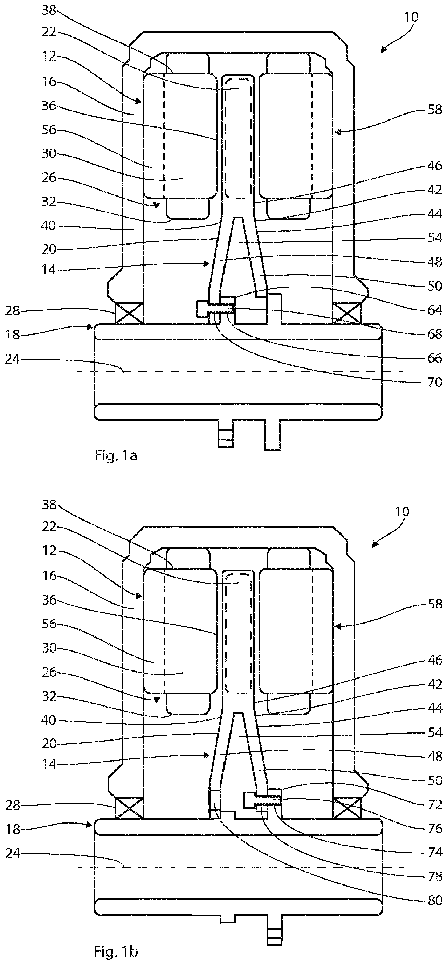

Figures 1a and 1b viewed from the first respective second direction.

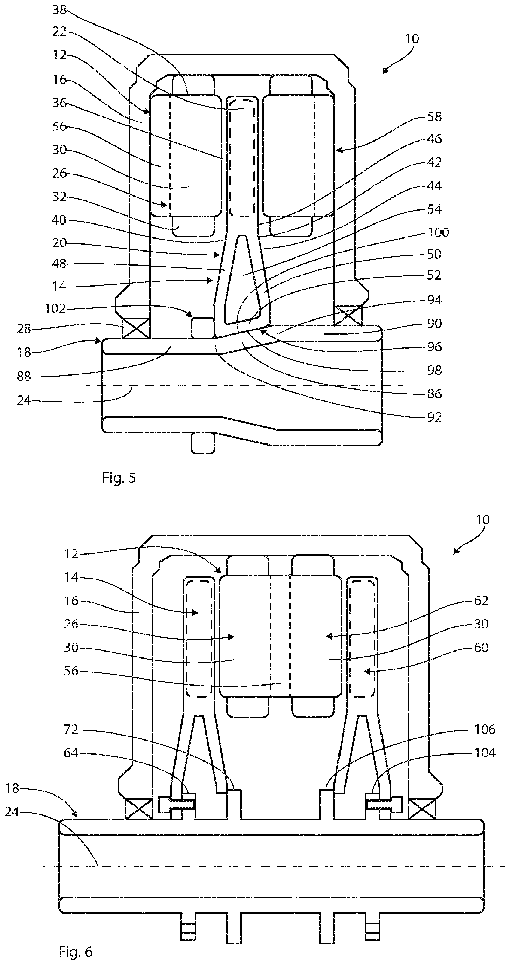

Figure 5 is a cross-sectional view of the upper part of an alternative axial-flux motor.
Figure 6 is a cross-sectional view of the upper part of another alternative axial-flux motor.

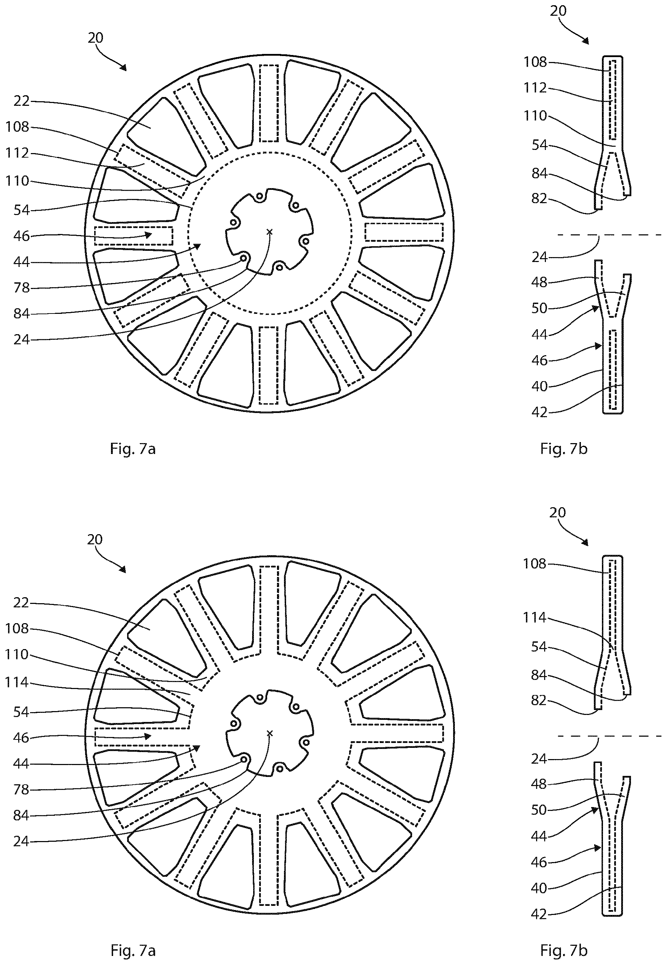

Figures 7a and 7b show radial and axial cross-sectional views of an alternative magnet holder to the one shown in Figures 1a and 1b.
Figures 8a and 8b show radial and axial cross-sectional views of another alternative magnet holder to the one shown in Figures 1a and 1b.

### DETAILED DESCRIPTION OF THE DRAWINGS

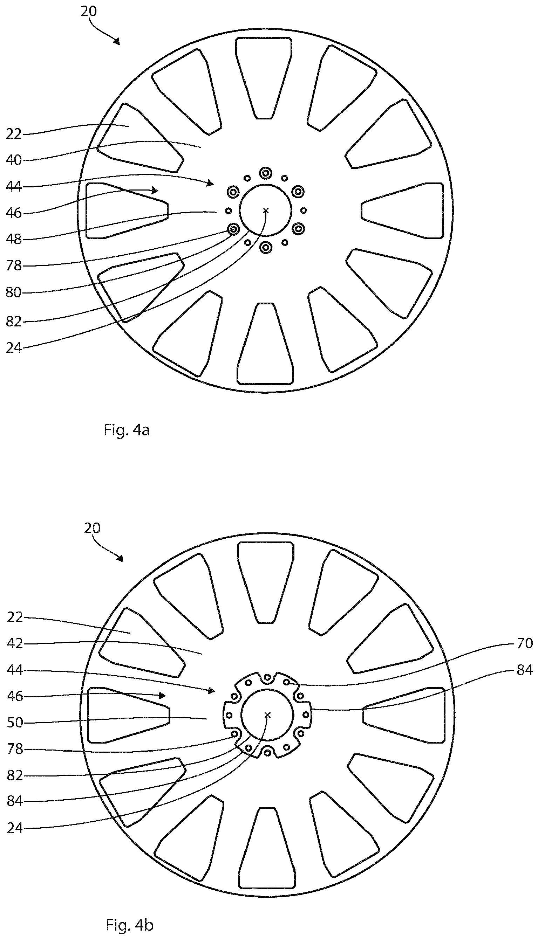

An embodiment of an electric motor 10 is shown in Figure 1. The electric motor 10 is an axial-flux motor 10. It has a stator 12 and a rotor 14 enclosed by a housing 16 that also supports the stator 14. The rotor 14 has a shaft 18, a magnet holder 20 attached to the shaft 18, and twelve permanent magnets 22 fixed to and supported by the magnet holder 20. The magnets 22 are arranged in a series in circular pattern, as shown in Figures 4a and 4b. The electric motor 10 further has bearings 28 interconnecting the shaft 18 and the housing 16 and rotationally supporting the rotor 14 relative to the housing 16 and the stator 12 supported by the housing 16. This way, the rotor 14 has a rotational axis 24 around which it can rotate.

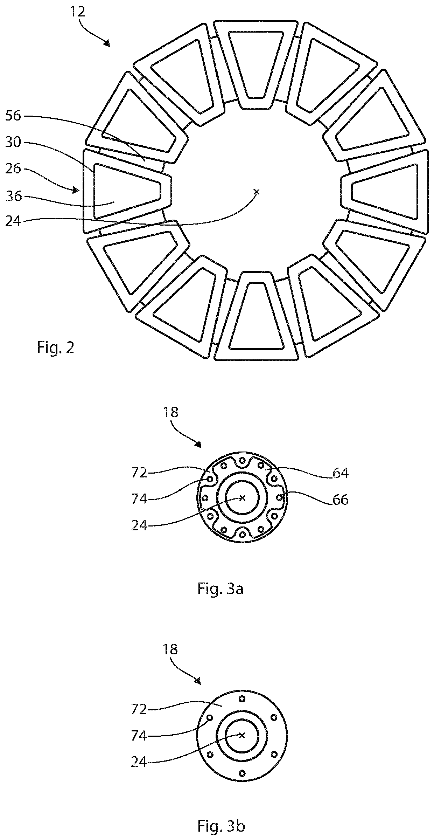

The stator 12 has twelve inductor elements 26 arranged in series in a circular pattern concentric with and matching the circular pattern of the magnets 22, as shown in Figure 2. Each inductor element 26 has an inductor core 30 and a coil 32 that contacts the inductor core 30 at the annular edge 40. The coil 32 is composed of a flat copper strip The inductor core 30 forms a planar air-gap surface 36 that faces the rotor 14. It also has an annular surface 38 that is transverse to the air-gap surface 36. The stator has an annular stator yoke 56 interconnecting the inductor cores 30 of the inductor elements 26. The stator yoke 56 is seamlessly joined to and of the same material as the inductor cores 30. The air-gap surfaces 36 of the inductor cores 30 face away from the stator yoke 56. The inductor cores 30 and the stator yoke 56 are manufactured from a single sheet ferromagnetic silicon steel wound in a spiral pattern centered on the rotational axis 24 to form a sandwiched sheet structure of ferromagnetic silicon steel. The sheet structure has an electrically insulating coating between each layer.

The magnets 22 are axially displaced relative to the inductor cores 30, thus forming an airgap between the magnets 22 and the inductor cores 30. This way, the inductor elements 26 and the magnets 22 are arranged to cooperate for rotating the rotor 14 relative to the stator 12.

The inductor core 30 defines a cylindrical geometry and the annular surface 38 is cylindrical and encircles the complete inductor core 30. The coil 32 is wound around the annular surface 38 of the inductor core 30. The coil 32 covers the annular surface 38. The cylinder axis of the cylindrical annular surface 38 and the coil axis of the coil 32 are colinear and parallel with the rotational axis 24 of the rotor 14.

The magnet holder 20 is disc-like and has a varying axial width, and the axial width of the magnet holder 20 is greater at the motor shaft 18 than at the magnets 33. This means that the axial width of the magnet holder 20 is narrowing between the motor shaft 18 and the magnets 22 at an increased radius relative to the rotational axis 24. The axial width is parallel to the motor shaft 18 and the rotational axis 24, which are horizontal in Figures 1a and 1b.

The magnet holder 20 has a first side 40 facing in a first direction parallel to the rotational axis 24 and a second side 42 facing in an opposite second direction. The magnet holder 20 is composed of an annular inner portion 44 and an annular outer portion 46 that are both centered on the rotational axis 24. As can be seen in Figures 1a and 1b, the axial width of the inner portion 44 is greater than the axial width of the outer portion 46. The outer portion 46 is joined to the inner portion 44. The inner portion 44 is fixed to the motor shaft 18 and the outer portion 46 supports the magnets 22.

The inner portion 44 of the magnet holder 20 is circular symmetric and taper toward the outer portion 46, which means that the axial width of the inner portion 44 decreases with the radial distance from the rotational axis 24. The inner portion 44 has a convex geometry on both the first side 40 and the second side 42 of the magnet holder 20.

The inner portion 44 is composed of an annular first wall 48 at the first side 40 of the magnet holder 20 and an annular second wall 50 at the second side 42 of the magnet holder 20. The first wall 48 and the second wall 50 contact the motor shaft 18 and are centered on the rotational axis 24. The first wall 48, the second wall 50, and the motor shaft 18 jointly enclose an annular first interior space 54 that is centered on the rotational axis 24. This means that the first interior space 54 is open toward the motor shaft 18. The first interior space 54 is located between the first wall 48 and the second wall 50, which means that the inner portion 44 contributes to form the first interior space 54. The first wall 48 and the second wall 50 converge toward and connect at the outer portion 46. The first interior space 54 is circular symmetric relative to the rotational axis 24. Figures 1a and 1b show an axial cross-section relative to the rotational axis 24 in which the first interior space 54 outlines a triangular geometry.

The first wall 48 forms a first shaft bore 82 and the second wall forms a second shaft bore 84 through which the motor shaft 18 extends, see Figures 4a and 4b. The motor shaft 18 has a radially extending first flange 64 and a radially extending second flange 72. The profiles of the first flange 64 and the second flange 72 are shown in Figures 3a and 3b. As can be seen in a comparison of Figure 3a and Figure 4b, the second shaft bore 84 and the first flange 64 have geometries with matching protrusions and depressions transverse to the rotational axis 24 that allow for the first flange 64 to pass through the second shaft bore 84. This way, the second shaft bore 84 is arranged to allow passage of the first flange 64. In an alternative embodiment (not shown), this achieved by second shaft bore being circular and the first flange having a circular outer edge that is smaller than the second shaft bore, and the second flange has a circular outer edge with a greater diameter than the circular outer edge of the first flange.

The first wall 48 is attached to the first flange 64 by way of first bolts 68 cooperating with threaded first bores 66 in the first flange 64. The first bores 66 and the first bolts 68 are oriented parallel with the rotational axis 24. Each first bolt 68 extends through a first through hole 70 in the first wall 48 and has a head that engages the first wall 48 and biases the first wall 48 against the first flange 64. Similarly, the second wall 50 is attached to the second flange 72 by second bolts 76 by way of second bolts 76 cooperating with threaded second bores 74 in the second flange 72. The second bores 74 and the second bolts 76 are oriented parallel with the rotational axis 24. Each second bolt 76 extends through a second through hole 78 in the second wall 50 and has a head that engages the second wall 50 and biases the second wall 50 against the second flange 72. The heads of the first bolts 68 and the second bolts 76 face in the first direction and the first wall 48 of the inner portion 44 has access holes 80 coaxial with the second bores 74 through which the second bolts 76 can be tightened.

The outer portion 46 of the magnet holder 20 is a single-walled solid structure and has a planar geometry on both the first side 40 and the second side 42 of the magnet holder 20. This outer portion 46 has a uniform axial width both tangentially and radially relative to the rotational axis 24.

The axial width of the magnet holder 20 at the motor shaft 18 is twice the axial width of the magnet holder 20 at the magnets 22. It is specified above that the inner portion 44 of the magnet holder 20 has a first wall 48 and a second wall 50. The combined axial width of the first wall 48 and the second wall 50 is about the same as the axial width of the outer portion 46. The axial width of each of the first wall 48 and the second wall 50 is about half of the axial width of the outer portion 46. The inner portion 44 of the magnet holder 20 extends to a first radius relative to the rotational axis 24, and the outer portion 46 of the magnet holder 20 extends to a second radius relative to the rotational axis 24. The first radius is about 55% of the second radius. The center-of gravity of each magnet 22 is located at a third radius relative to the rotational axis 24, and the first radius of the inner portion 44 is about 65% of the third radius.

The magnet holder 20 is a monolithic structure formed from a single piece of a composite material composed of a polymer matrix and reinforcing fibers. The reinforcing fibers are in the form of overlapping sheets of woven carbon fibers. Each sheet of woven carbon fibers has a maximum extension that is less than half the radial extension the magnets 22 relative to the rotational axis 24. The radial extension of the magnet 22 shown in Figures 1a and 1b is vertical.

The magnet holder 20 is manufactured using the technology proposed in WO 2016/097093 A1, with the mandrel forming the first interior space 54. This means that the first interior space 54 is hollow after the mandrel has been removed. In an alternative embodiment, the first interior space 54 is filled with an electrically insulating microcellular plastics having a lower density than the composite material of the magnet holder 20.

An alternative embodiment of an electric motor 10 is shown in Figure 5. Apart from the rotor 14, the electric motor 10 has the same features as the electric motor described in relation to Figures 1a and 1b. The rotor 14 differs in that the inner portion 44 additionally has a third wall 52 that interconnects the first wall 48 and the second wall 50. The first wall 48, the second wall 50, and the third wall 52 jointly enclose the first interior space 54. The third wall 52 faces and contacts the motor shaft 18.

The motor shaft 18 has a conical section 86 centered on and extending along the rotational axis 24. The motor shaft 18 has a cylindrical narrow section 88 and a cylindrical wide section 90. The conical section 86 has a narrow end 92 connected to the narrow section 88 and a wide end 94 connected to the wide section 90.

The third wall 52 of the inner portion 44 forms a conical shaft bore 96 and the motor shaft 18 extends through the conical shaft bore 96. The conical section 86 of the motor shaft 18 forms a smooth conical shaft surface 98 in the form of a truncated cone and the conical shaft bore 96 forms a smooth conical bore surface 100 that is flush with the conical shaft surface 98. This way, the conical section 86 and the conical shaft bore 96 have matching geometries and the conical section 86 is mated with the magnet holder 20 within the conical shaft bore 96. The magnet holder 20 is fixed to the motor shaft 18 by an interference fit between the third wall 52 and the conical section 86.

The rotor 14 has a lock 102 in the form of a lock ring 102 centered on the rotational axis 24 The loch rung 102 is press fitted on the narrow section 88 of the motor shaft 18 and is thus attached on the narrow section 88 by an interference fit. The lock 102 engages the inner portion 44 of the magnet holder 20 and biases the magnet holder 20 toward the wide section 90. This way, the lock 102 prevents the magnet holder 20 from moving toward the narrow section 88. In an alternative embodiment, the lock 102 is a threaded ring having female threads and that the narrow section 88 has cooperating male threads that biases the lock ring 102 toward the wide section 90.

The electric motors 10 shown in Figures 1a and 1b and Figure 5 are a dual-stator axial-flux motors. The electric motor 10 has an additional stator 58 sharing the features of the above-described stator 12 but arranged with the air-gap surfaces of the inductor cores facing the stator 12. The rotor 14 is arranged between the stator 12 and the additional stator 58. In an alternative embodiment, the electric motor 10 is a single-sided axial-flux motor having no additional stator 58. In another alternative embodiment shown in Figure 6, the electric motor 10 is a double-sided axial-flux motor. In addition to the single-sided axial-flux motor, the electric motor 10 has an additional rotor 60 sharing the features of the rotor 14 of Figures 1a and 1b. The motor shaft 18 has an additional first flange 104 and an additional second flange 106 cooperating with the additional rotor 60 as described above for the rotor 14 the embodiment of Figures 1a and 1b, but with the first side of the additional rotor 60 facing in the second direction, which means that the bolts fixing the additional rotor 60 to the motor shaft 18 are oriented in the opposite direction. The stator 12 is positioned between the rotor 14 and the additional rotor 60. The stator 12 has a plurality of additional inductor elements 62 sharing the features of the inductor elements 26 described in relation to Figures 1a and 1b but arranged with the air-gap surfaces facing the additional rotor 60. The stator yoke 56 is positioned between the plurality of inductor elements 26 and the plurality of additional inductor elements 62 and interconnects the inductor cores 30 of the inductor elements 26 and the additional inductor elements 62.

An alternative magnet holder 20 to the one shown in Figures 1a and 1b is shown in Figures 7a and 7b. Figure 7a has been rotated 15° relative to Figure 1a. The cross section in Figure 7b is vertical to Figure 7a. The magnet holder 20 differs in that it has twelve second interior spaces 108 located between each pair of neighboring magnets 22. The first interior space 54 and the second interior space 108 are indicated by dashed lines in Figures 7a and 7b. The second interior spaces 108 are disjoint from the first interior space 54. This means that the outer portion 46 of the magnet holder 20 a is not a single-walled solid structure, as in the embodiment of Figures 1a and 1b.

The radial length of each disjoint second interior space 108 is smaller than the radial length of the neighboring magnets 22. The tangential width of the second interior space 108 is smaller than the tangential width of the separation between the neighboring magnets 22 and the second interior spaces 108 do not connect to the magnets 22.

Each magnet 22 has four sides facing in different directions that are transverse to the rotational axis 24. The sides outline the profile of the magnets in Figure 7a. The magnet holder 20 encircles each of the magnets 22 and contacts all sides of the magnets 22. The magnet holder 20 forms an annular bridge 110 in the form of an uninterrupted ring structure. The annular bridge 110 is centered on the rotation axis 24, contacts the magnets 22, and connects the first side 40 and the second side 42 of the magnet holder 22, as can be seen in Figure 7b. The first interior space 54 is empty and each of the second interior spaces 108 is filled with a core 112 of microcellular plastics.

Figures 8a and 8b show radial and axial cross-sectional views of another alternative magnet holder 20 to the one shown in Figures 1a and 1b. The magnet holder 20 differs from the magnet holder 20 in Figures 7a and 7b in that the annular bridge 110 forms interior openings 114 interconnecting the first interior space 54 with each of the second interior spaces 108. This way, the first interior space 54 and the second interior spaces 108 jointly form a single uninterrupted space. The magnet holder 20 of Figures 8a and 8b differs further by the second interior spaces 108 being empty.

The magnet holder described in relation to Figure 5 can modified as described above in relation to Figures 7a and 7b or in relation to Figures 8a and 8b. In one embodiment with the modification of Figure 8, the first interior space 54 is filled with a first core and each of the second interior spaces is filled with a second core. The first cores and the second cores are jointly formed from a single monolithic piece of microcellular plastics. In another embodiment with the modification of Figure 8, the first interior space 54 and the second interior spaces 108 are empty.

### ITEM LIST

- 10: electric motor
- 12: stator
- 14: rotor
- 16: housing
- 18: motor shaft
- 20: magnet holder
- 22: magnet
- 24: rotational axis
- 26: inductor element
- 28: bearing
- 30: inductor core
- 32: coil
- 36: air-gap surface
- 38: annular surface
- 40: first side
- 42: second side
- 44: inner portion of magnet holder
- 46: outer portion of magnet holder
- 48: first wall
- 50: second wall
- 52: third wall
- 54: first interior space
- 56: stator yoke
- 58: additional stator
- 60: additional rotor
- 62: additional inductor elements
- 64: first flange of motor shaft
- 66: first bores
- 68: first bolts
- 70: first through holes
- 72: second flange of motor shaft
- 74: second bores
- 76: second bolts
- 78: second through holes
- 80: access holes
- 82: first shaft bore
- 84: second shaft bore
- 86: conical section
- 88: narrow section
- 90: wide section
- 92: narrow end
- 94: wide end
- 96: conical shaft bore
- 98: conical shaft surface
- 100: conical bore surface
- 102: lock
- 104: additional first flange
- 106: additional second flange
- 108: second interior spaces
- 110: annular bridge
- 112: core
- 114: interior openings

## Claims

1. An electric motor (10) comprising a stator (12) and a rotor (14), wherein the electric motor (10) is an axial-flux motor, the rotor (14) has a rotational axis (24) and is rotationally arranged relative to the stator (12), and the rotor (14) comprises:
a plurality of permanent magnets (22),
a magnet holder (20), and
a motor shaft (18), wherein
the magnet holder (20) supports the magnets (22) and is fixed to the motor shaft (18),
the magnet holder (20) has an varying axial width, and the axial width of the magnet holder (20) is greater at the motor shaft (18) than at the magnets (22).

2. The electric motor (10) according to claim 1, wherein the magnet holder (20) forms an first interior space (54) located at the motor shaft (18).

3. The electric motor (10) according to claim 2, wherein the first interior space (54) is annular and centered on the rotational axis (24), and the first interior space (54) tapers at an increased radial distance from the rotational axis (24).

4. The electric motor (10) according to claim 2 or 3, wherein the magnet holder (20) is composed of an annular inner portion (44) centered on the rotational axis (24) and an annular outer portion (46) centered on the rotational axis (24), the outer portion (46) is joined to the inner portion (44), the inner portion (44) is fixed to the motor shaft (18), the outer portion (46) supports the magnets (22), and the axial width of the inner portion (44) is greater than the axial width of the outer portion (46).

5. The electric motor (10) according to claim 4, wherein the inner portion (44) tapers at an increased radial distance from the rotational axis (24).

6. The electric motor (10) according to claim 4 or 5, wherein the magnet holder (20) has a first side (40) facing in a first direction and a second side (42) facing in a second direction, the second direction is opposite to the first direction, the inner portion (44) has a first wall (48) at the first side (40) and a second wall (50) at the second side (42), the first wall (48) and the second wall (50) are annular and centered on the rotational axis (24), the first interior space (54) is located between the first wall (48) and the second wall (50), and the first wall (48) and the second wall (50) converge toward the outer portion (46).

7. The electric motor (10) according to claim 6, wherein the first interior space (54) is open toward the motor shaft (18), and the first wall (48), the second wall (50), and the motor shaft (18) jointly enclose the first interior space (54).

8. The electric motor (10) according to claim 6 or 7, wherein the motor shaft (18) comprises a radially extending first flange (64) and a radially extending second flange (72), and the first wall (48) is attached to the first flange (64) and the second wall (50) is attached to the second flange (72).

9. The electric motor (10) according to claim 6, wherein the motor shaft (18) has a conical section (86), the inner portion (44) of the magnet holder (20) forms a conical shaft bore (96), the motor shaft (18) extends through the conical shaft bore (96), and the conical section (86) of the motor shaft (18) is mated with the magnet holder (20) within the conical shaft bore (96).

10. The electric motor (10) according to claim 9, wherein the inner portion (44) has a third wall (52) facing the motor shaft (18), the first wall (48), the second wall (50), and the third wall (52) jointly enclose the first interior space (54), and the third wall (52) forms the conical shaft bore (96).

11. The electric motor (10) according to claim 9 or 10, wherein the motor shaft (18) has cylindrical narrow section (88), the conical section (86) has a narrow end (92) and a wide end (94), and the narrow end (92) is connected to the narrow section (88), and the rotor (14) further comprises a lock (102) preventing the magnet holder (20) from moving toward the narrow section (88).

12. The electric motor (10) according to any of the claims 4 to 11, wherein the outer portion (46) defines a planar geometry on the first side (40) of the magnet holder (20) and a planar geometry on the second side (42) of the magnet holder (20), and the outer portion (46) of the magnet holder (20) is a single-walled solid structure.

13. The electric motor (10) according to any of the claims 4 to 11, wherein the magnet holder (20) is a monolithic structure.

14. The electric motor (10) according to claim 13, wherein the magnet holder (20) is of a composite material composed of a polymer matrix and reinforcing fibers.

15. The electric motor (10) according to claim 14, wherein the reinforcing fibers are composed of overlapping sheets of woven carbon fibers, wherein each sheet at the magnets (22) has a maximum extension that is less than the radial length of the magnets (22) relative to the rotational axis (24).
